# EUROPEAN PATENT APPLICATION

(11) **EP 4 299 366 A1**
(43) Date of publication of application: **03.01.2024**
(21) Application number: 22182175.4
(22) Date of filing: 30.06.2022
(51) Int. Cl.: B60L 53/80

(54) **METHOD AND APPARATUS FOR MOUNTING AND DISMOUNTING BATTERY OF A MOBILE MINING MACHINE AND A MOBILE MINING MACHINE**

(71) Applicant: Sandvik Mining and Construction Oy, 33330 Tampere (FI)
(72) Inventor: Haikio, Sami, 20101 Turku (FI); Laihonen, Esko, 20101 Turku (FI)
(74) Representative: Sandvik

(57) **Abstract**

Method for mounting and dismounting a battery of a mining machine (100). The method comprising: lowering of an end of the mining machine (100) by an actuator (8) of a height adjustable suspension of the mining machine and releasing a first battery (20) or a battery cage from a holding and gripping device (40) for dismounting the first battery (20) and moving the mining machine and the holding and gripping device from the first battery, moving the mining machine to a second battery so that the holding and gripping device (40) is in an alignment with a counter part of the second battery and ready to connect to the counter parts of the second battery or the battery cage, elevating the end of the mining machine by the actuator (8) of the height adjustable suspension of the mining machine for gripping and holding the second battery with the gripping and holding device, and elevating the end of the mining machine by the actuator of the height adjustable suspension to an intended level.

## Description

### FIELD OF THE INVENTION

The invention relates to method for mounting and dismounting a battery of a mobile mining machine.

The invention relates also to an arrangement for mounting and dismounting a battery of a mobile underground mining machine.

Further, the invention relates also to a mobile mining machine.

### BACKGROUND OF THE INVENTION

Various embodiments of mobile mining machines and mining vehicles are known. Some mobile mining machines are battery powered rather than diesel powered.

Some electric mining vehicles may include an electric motor, a primary battery assembly comprising a battery pack used to power the electric motor, where the primary battery assembly can be mounted and dismounted from the electric vehicle. The vehicle may also include a mounting and dismounting arrangement capable of mounting and dismounting the primary battery assembly from the electric vehicle. This mounting and dismounting of a primary battery assembly may be called also as a battery exchange or a battery swap.

Various mounting and dismounting arrangements of a primary battery assembly have been introduced in connection with the mounting and dismounting primary battery assembly. However, they may be rather complicated. Some primary battery assemblies may be rather heavy and an arrangement for mounting and dismounting primary battery may be configured rather robust. A reach of the mounting and dismounting arrangement may be in their limits which may lead to elevated service requirements and/or higher risk of damages.

### OBJECTIVE OF THE INVENTION

The objective of the invention is to alleviate the disadvantages mentioned above.

### SUMMARY

According to first aspect, the present invention provides a method for mounting and dismounting a battery of a mining machine.

According to the invention the method comprising:
lowering of an end of the mining machine by an actuator of a height adjustable suspension of the mining machine and releasing a first battery or a battery cage from a holding and gripping device for dismounting the first battery and moving the mining machine and the holding and gripping device from the first battery, moving the mining machine to a second battery so that the holding and gripping device is in an alignment with a counter part of the second battery and ready to connect to the counter parts of the second battery or the battery cage, elevating the end of the mining machine by the actuator of the height adjustable suspension of the mining machine for gripping and holding the second battery with the gripping and holding device, and elevating the end of the mining machine by the actuator of the height adjustable suspension to an intended level.

According to a second aspect the present invention provides an arrangement of a mining machine for mounting and dismounting a battery of a mining machine. According to the invention the arrangement comprising a height adjustable suspension at least in an end of the mining machine, a gripping and holding device for gripping and holding a battery, and a counterpart for the gripping and holding device arranged on a battery or on a battery cage.

According to a third aspect the present invention provides a mobile mining machine. According to the invention the mobile mining machine comprises an arrangement for mounting and dismounting a battery of a mining machine according to at least one before and/or below mentioned embodiment.

The technical effect is that by utilizing a height adjustable suspension and a kneeling function of the mobile mining machine it is possible to provide an effective and reliable moving arrangement for a battery exchange of the mining machine.

The method and the arrangement and the mobile mining machine are characterized by what is stated in the independent claims.

Some other embodiments are characterized by what is stated in the other claims. Inventive embodiments are also disclosed in the specification and drawings of this patent application. The inventive content of the patent application may also be defined in other ways than defined in the following claims. The inventive content may also be formed of several separate inventions, especially if the invention is examined in the light of expressed or implicit sub-tasks or in view of obtained benefits or benefit groups. Some of the definitions contained in the following claims may then be unnecessary in view of the separate inventive ideas. Features of the different embodiments of the invention may, within the scope of the basic inventive idea, be applied to other embodiments.

In an embodiment of the method, wherein lowering of the end of the mining machine may comprise moving a frame of the mining machine from a first position, i.e. an upper position, to a second position, i.e. a lower position. An advantage for this is that by moving the frame of the mining machine is an efficient way of achieving the kneeling function of an end of the mining machine. It also helps the mounting and dismounting device to release and/or attach the battery.

In an embodiment of the method, wherein elevating of the end of the mining machine may comprise moving the frame of the mining machine from a second position, i.e. a lower position, to a first position, i.e. an upper position. An advantage for this is that elevating an end by moving the frame of the mining machine is an efficient way of achieving the lifting function of a battery of the mining machine.

In an embodiment of the method wherein moving of the frame of the mining machine may comprise setting the actuator of a height adjustable suspension system of the mining machine from an extended state to a retracted state and/or from a retracted state to an extended state. An advantage for this is that by using the actuator an efficient and a reliable way of moving, i.e. elevating or lowering, the frame may be achieved.

In an embodiment of the method, wherein the frame of the mining machine may comprise a support structure of an axle of the wheel, wherein the support structure being arranged rotatable on the frame of the mining machine, wherein moving the frame may comprise adjusting a movement between the support structure and the frame by the actuator of the height adjustable suspension. An advantage for this is that the kneeling function may be achieved with a rather simple and reliable configuration of an actuator, between the frame and the support structure.

In an embodiment of the method, wherein the mobile mining machine comprising a movable holding and gripping device, wherein the method further comprising a phase of moving the holding and gripping device with a moving device of the holding and gripping device and lifting/lowering the battery with the movable holding and gripping device. A dedicated moving device of the holding and gripping device, in addition to lowering and/or elevating of an end of the mining machine by an actuator of a height adjustable suspension of the mining machine, may provide more flexibility and an extended reach for the battery exchange.

In an embodiment of the arrangement the gripping and holding device may comprise at least two hook-like gripping and holding parts. An advantage is that hook-like gripping and holding provide reliable gripping and holding parts for the battery. The gripping and holding device may be made comprising of rather simple configuration, which is an advantage, when using the arrangement in difficult conditions, such in underground mines.

In an embodiment of the arrangement the height adjustable suspension may comprise a frame of the mining machine and a support structure of an axle of a wheel of the mining machine, wherein the frame and the support structure are arranged relative movably by an actuator of the adjustable suspension of the mining machine. An advantage is that a reliable solution for the arrangement may be achieved.

In an embodiment of the arrangement the support structure of an axle of the wheel may be arranged rotatably supported to the frame and a first end of the actuator may be connected to the frame and a second end of the actuator may be connected to the support structure. An advantage is that a robust and a reliable solution for the arrangement may be achieved by using a rotatable connection between the frame and the support structure, and the actuator for moving the frame in relation to the support structure.

In an embodiment of the arrangement the frame and the support structure of an axle of the wheel may be rotatably arranged with each other by a pivot. An advantage is that the connection of the support structure and the frame may be configured robust and reliable by using a pivot.

In an embodiment of the arrangement the gripping and holding device may be arranged in an end of the mining machine between the front wheel axle and the front end of the mobile mining machine, or between a rear wheel axle and the rear end of the mining machine. An advantage for this is that the dismounting and mounting of the battery (the battery swapping) is easy to perform in an end of the machine. The machine is easy to move to the battery and the gripping and holding device are easy to align with the corresponding counter parts of the battery.

In an embodiment of the arrangement the actuator of the height adjustable suspension may be a hydraulic actuator. An advantage for this is that hydraulic system of the mining machine may be easily to arrange control the kneeling function of the arrangement.

In an embodiment of the arrangement the arrangement further comprises a moving device of the holding and gripping device. An advantage for this is that making the griping and holding device movable an extended operation range for the gripping and holding device may be achieved in addition to the kneeling function of the mining machine. In addition to the kneeing system, especially if the movement range of the adjustable suspension is not enough for the battery mounting/unmounting, then use of a moving device/lifting device/system in addition to suspension movement brings more reach and flexibility. In this case the moving device of the holding and gripping device can be significantly smaller/with a shorter range of motion, than without the suspension system.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Figure 1** is a schematic perspective view of a mobile mining machine,
**Figure 2** is a schematic sideview partially cut in a vertical plane of a front part of a mobile mining machine in a lower position (kneeling position) provided with an embodiment of an arrangement according to the disclosure, and a battery detached,
**Figure 3** is schematic sideview partially cut in a vertical plane of a front part of a mobile mining machine in a lower position (kneeling position) provided with an embodiment of an arrangement according to the disclosure, and a battery attached,
**Figure 4** is a schematic sideview partially cut in a vertical plane of a front part of a mobile mining machine in an upper position and a battery attached,
**Figure 5** is a schematic sideview partially cut in a vertical plane of a front part of a mobile mining machine provided with a second embodiment of an arrangement according to the disclosure,
**Figure 6** is a schematic sideview partially cut in a vertical plane of a front part of a mobile mining machine in a lower position (kneeling position) provided with a second embodiment of an arrangement according to the disclosure, and a battery detached,
**Figure 7** is a schematic sideview partially cut in a vertical plane of a front part of a mobile mining machine in a lower position (kneeling position) provided with a second embodiment of an arrangement according to the disclosure, gripping and holding devices in a first position,
**Figure 8** is a schematic sideview partially cut in a vertical plane of a front part of a mobile mining machine in a lower position (kneeling position) provided with a second embodiment of an arrangement according to the disclosure, gripping and holding devices in a second position, and a battery attached,
**Figure 9** is a schematic sideview partially cut in a vertical plane of a front part of a mobile mining machine in an upper position provided with a second embodiment of an arrangement according to the disclosure, gripping and holding devices in a second position, and a battery attached, and
**Figure 10** is a schematic perspective view partially cut in a vertical plane of a front part of a mobile mining machine, and an embodiment of a holding and gripping device, and a battery detached.

In the figures, some embodiments are shown simplified for the sake of clarity. Similar parts are marked with the same reference numbers in the figures.

### DETAILED DESCRIPTION

According to an aspect of the invention, an arrangement described in this description may be arranged in a mobile mining machine 100 that may be at least partially electrically powered by one or more batteries onboard of the machine. The mobile mining machine may be a mine machine, or a construction machine, e.g., a rock drilling rig, a development drill, a tunneling drilling machine, a surface drilling machine, a bolting or reinforcing vehicle, a rock removal machine, a long-hole drill rig, an explosive charging machine, a loader, a transport vehicle, a loading or hauling machine, setting vehicle of gallery arcs or nets, a concrete spraying machine, a crusher, or a measuring vehicle. The mobile mining machine 100 may be an underground mining machine.

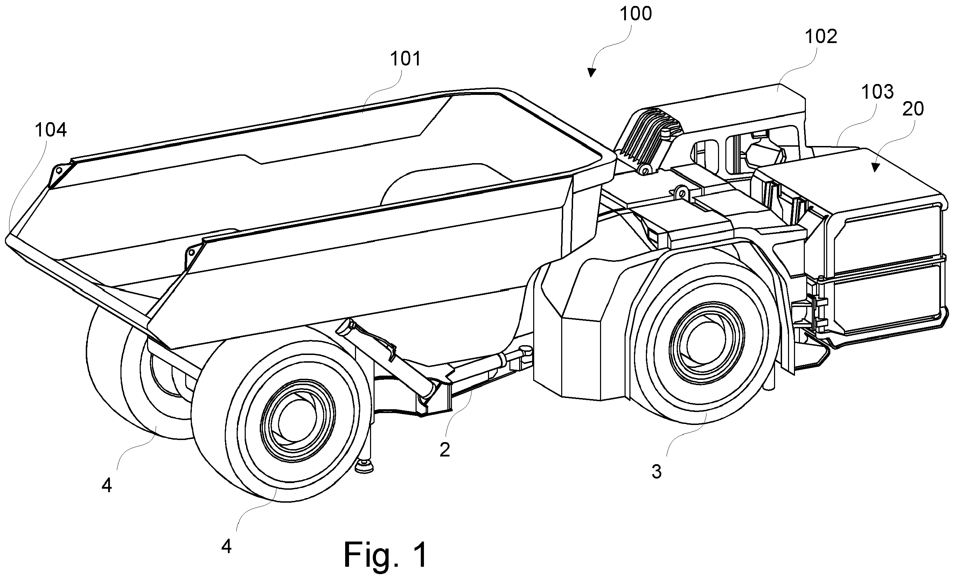

Figure 1 shows one example of a mobile mining machine 100. The mobile mining machine may be a mining vehicle. In an embodiment the mobile mining machine 100 may be equipped with a dumb bed 101. The drive equipment may comprise one or more drive motors and one or more power transmission means for transmitting drive power to one or more wheels 3, 4. The drive power transmission may comprise a mechanical gear system and mechanical power transmission members or, alternatively, the drive power transmission may be hydraulic or electric. In an embodiment the drive motor may be a hub motor. In an embodiment a powertrain of the mobile underground mining machine may comprise a hub motor arrangement.

The mobile underground mining machine 100 of the Figure 1 has four wheels 3, 4. The number of wheels may vary and instead of wheels, there may be different kind of mechanism for moving, for example a track arrangement. In an embodiment the mobile underground mining machine may comprise a frame 2.

The mining machine 100 may be comprised of a frame 2 (or chassis), a set of wheels 3, 4 and optionally a bed 101. The bed 101 may be coupled with the frame 2 and may be tilted between a lowered position and raised position.

For reference, the mining machine 100 is also characterized as having a front end 103, a rearward end 104, a first side and a second side.

The mining machine 100 may be an electrically powered machine. In an embodiment the mining machine may comprise a battery assembly that may be simply called as a battery 20. In an embodiment of the mining machine the battery 20 may be an exchangeable battery.

The mining machine 100 may include an electric motor, a primary battery assembly comprising a battery pack used to power the electric motor, where the primary battery assembly, i.e. the battery 20, may be mounted and dismounted from the mining machine. In an embodiment the mining machine may also include a mounting and dismounting arrangement capable of mounting and dismounting the primary battery assembly from the mining machine.

In this a first battery may be detached from the mining machine and a second battery may be attached to the mining machine. In an embodiment the first battery may be a deployed battery in the mining machine. The second battery may be a charged battery and deployable for the mining machine. In an embodiment of figure 1 the battery 20 may be arranged in the front end of the mining machine. In another embodiment of the mining machine the battery 20 may be arranged on a rear end of the mining machine.

The mining machine 100 may also be provided with various standard vehicular provisions, such as a cab 102 for receiving one or more operators. In an embodiment the mining machine may be without a cab, for example, if the mining machine is an autonomous mining machine or a remote-controlled mining machine.

In some embodiments, the frame 2 of the mining machine 100 may be divided into a first frame portion and a second frame portion. The first frame portion may be a front portion, optionally associated with a cab 102. The second frame portion may be a rearward portion, optionally associated with a bed 101. In some embodiments, a mechanical linkage connects the first frame portion and the second frame portion so that the two portions of the frame can move relative to one another (e.g., swivel or pivot). This kind of machines are often called as articulated machines.

The mobile mining machine 100 of figures 1 to 10 has a frame 2 that may be supported by the wheels 3, 4. In an embodiment the frame 2 may be arranged to be supported by a suspension arrangement. The suspension arrangement may be an adjustable suspension arrangement. In an embodiment the adjustable suspension arrangement may be a height adjustable suspension arrangement. The height adjustable suspension arrangement may comprise an actuator 8 for adjusting a relative distance between the frame 2 and the wheel 3. In an embodiment an axle 7 of the wheel 3 may be arranged on a support structure 6. The support structure 6 of the axle 7 of the wheel 3 and the frame 2 may be arranged to move relative each other. In an embodiment the support structure 6 of the axle 7 of the wheel 3 and the frame 2 may be arranged to rotate around a pivot axle 5. The support structure 6 may have a first end 61 and a second end 62 extending from the first end 61 in a longitudinal axis of the mobile mining machine. In an embodiment the axis 7 of the wheel 3 may be arranged on the support structure 6 between the first end 61 and the second end 62 of the support structure 6. In an embodiment the first end 61 of the support structure 6 may be arranged next to the pivot axle 5. In an embodiment the actuator 8 may be arranged between the frame 2 and the support structure 6. In an embodiment a first end 81 of the actuator 8 is connected on the frame 2 and the second end 82 of the actuator is connected on the support structure 6. By controlling the actuator 8 it may be possible to adjust distance between the frame 2 and the support structure 6 of the wheel axle 7 (and the wheel 3). As the wheel 3 is supported on a surface S, it may be possible to control a distance of the frame of the mining machine from a surface S. In an embodiment the actuator 8 may be a cylinder-piston-type actuator actuated by pressure medium. In an embodiment the actuator 8 may be a hydraulic actuator. In an embodiment the actuator 8 may be a pressure-gas actuator. When the actuator 8 is in a retracted position a distance between the frame 2 and the support structure 6 of the axle 7 of the wheel 3 is adjusted to a minimum value.

When the actuator 8 is in the retracted state the mobile mining machine 100 is in a kneeling position. A distance between the support surface S, i.e. ground, and the frame 2 of the mining machine is short, i.e. in a minimum value, when the mobile mining machine is in a kneeling position. In an embodiment the battery 2 attached to the mining machine 100 may be laid down on the surface S when the distance of the frame 2 and the surface S is at the minimum level i.e. when the mining machine is kneeling.

When the actuator 8 is in an extended state the distance between the frame 2 and the support structure 6 is adjusted to a maximum value. Then the distance between the support surface S, i.e. ground, and the frame of the mining machine may be high. A normal drive position of the mining machine provided with the adjustable height suspension may be between the retracted state and the extended state of the actuator 8. In an embodiment the actuator may be of a cylinder-piston type actuator driven by a pressure medium. Cylinder-piston type actuators are known in the art. It is assumed that a person skilled in the art is capable to connect and use such an actuator with the height adjustable suspension. In an embodiment the actuator may be driven by a pressure medium conducted to the cylinder piston actuator via conducts, i.e. pressure lines. A piston of the cylinder piston type actuator may be driven by conducting the pressure medium to a cylinder space to one side of the piston, which is arranged movably in the cylinder space. Pressure medium from the other side of the cylinder may be conducted to a tank. By changing the side of the cylinder space of the actuator 8 in which the pressure medium is conducted via valves and lines the actuator 8 may be set to a retracted state or to an extended state. In other embodiments other types of actuators may be used. The pressure medium may be fluid, for example hydraulic fluid, gas, or pressure air.

The mining machine 100 may also include a propulsion system comprising one or more electric motors that are powered by one or more batteries 20. In some embodiments, the mining machine may include at least two electric motors for powering each pair of wheels. In some embodiments, the mining machine may include four electric motors, where each motor independently powers one of four wheels. In an embodiment, the mining machine may include a first electric motor, a second electric motor, a third electric motor and a fourth electric motor, referred to collectively as a set of motors.

Embodiments can incorporate one or more batteries 20 to power set of motors and/or an auxiliary motor. As used herein, the term "battery" may refer to a primary battery assembly or a battery pack and generally refers to multiple battery modules in a heavy-duty pack housing, such as a battery cage. Each battery module may be comprised of multiple battery cells. In this way, a battery may also refer to a collection of individual battery cells. The battery cells, and therefore modules, may be functionally interconnected together.

In different embodiments, a battery 20 or a battery pack could incorporate any suitable kind of battery cell. Examples of battery cells include capacitors, ultra-capacitors, and electrochemical cells. Examples of electrochemical cells include primary (e.g., single use) and secondary (e.g., rechargeable). Examples of secondary electrochemical cells include lead-acid, valve regulated lead-acid (VRLA), gel, absorbed glass mat (AGM), nickel-cadmium (NiCd), nickel-zinc (NiZn), nickel metal hydride (NiMH), lithium-ion (Li-ion), and the like. A battery cell may have various voltage levels. In particular, in some cases two different battery cells in a battery pack could have different voltage levels. Similarly, the battery cell may have various energy capacity levels. In particular, in some cases, two different battery cells in a battery pack could have different capacity levels.

In some cases, it may be desirable to use multiple battery packs. As used herein, the term "battery assembly" may refer to a set of one or more battery packs. In some embodiments, a battery assembly may also include a cage or similar container for holding the separate battery packs together.

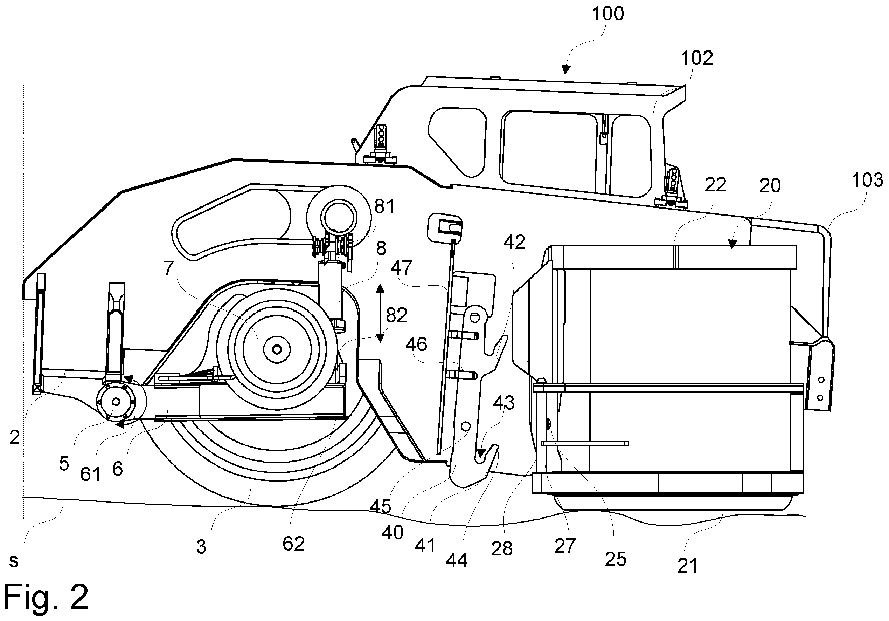

In the figures 2 to 4 is illustrated an embodiment of the arrangement comprising an arrangement of a mining machine for mounting and dismounting a battery 20 of a mining machine. The arrangement for mounting and dismounting a battery 20 of a mining machine comprising a height adjustable suspension at least in an end of the mining machine, a gripping and holding device 40 for gripping and holding a battery 20, and a counterpart 25, 26 arranged on a battery 20 or a battery cage for the gripping and holding device. In an embodiment the gripping and holding device 40 comprises at least two hook-like gripping and holding parts 41, 42. In an embodiment of the hook-like gripping and holding part may comprise a hook part 44 extending at an angle in relation to a vertical support 45, so that a recess 43 is formed between the vertical support 45 and the hook part 44. In an embodiment the gripping and holding device 40 may be connected to a frame 2 by connecting parts 46 and a support part 47. In an embodiment the gripping and holding device may comprise two pairs of hooks-like gripping and holding parts 41, 42. In an embodiment first hook-like gripping and holding parts 41 may be arranged at a distance from each other in horizontal direction. The horizontal direction may be a direction perpendicular to a longitudinal axis (or to a main moving direction) of the mining machine. In an embodiment the horizontal direction may be a parallel to an axis of the wheel 3.

In an embodiment the second hook-like gripping and holding parts 42 may be arranged at a distance from each other in horizontal direction and at a distance in a vertical direction from the first pair of hook-like gripping and holding parts 41.

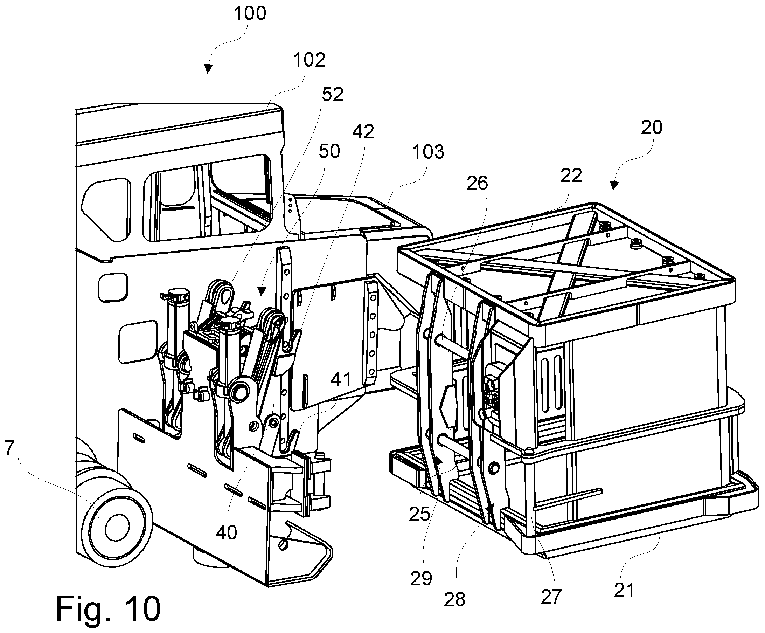

The hook like gripping and holding means 41, 42 may provide support surfaces to a counter parts of the battery 20 or a battery cage. In an embodiment the counter part may enter to the recess 43 of the hook-like gripping and holding part and supported by sides of the hook part 44 and the vertical support 45. As illustrated in fig 10 and in corresponding part of the description the battery 20 may have horizontal mounting bars that may function as counterparts 25, 26 to the hook-like gripping and holding means 41, 42.

Figure 2 illustrates schematic side view cut in a vertical plane of a front portion of an exemplary mining machine. In the figure 2 some parts of the battery exchanging arrangement are illustrated. In the figure the battery 20 is detached and arranged on a surface S, such as a ground. A front wheel 3 of the mobile mining machine 100 is supported on the support surface s. The wheel axle 7 is arranged on the support structure 6. the actuator may be set to its retracted state. The front part of the frame 2 is in a kneeling state. The hook-like gripping and holding means 41, 42 are in a vertical plane below the corresponding counter parts 25, 26 (see figure 10) of the battery.

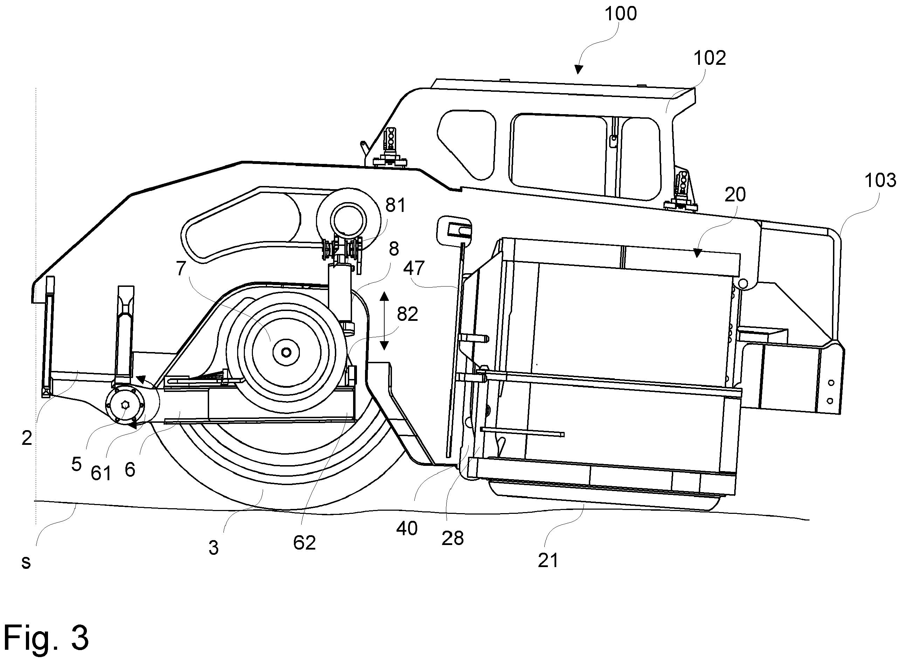

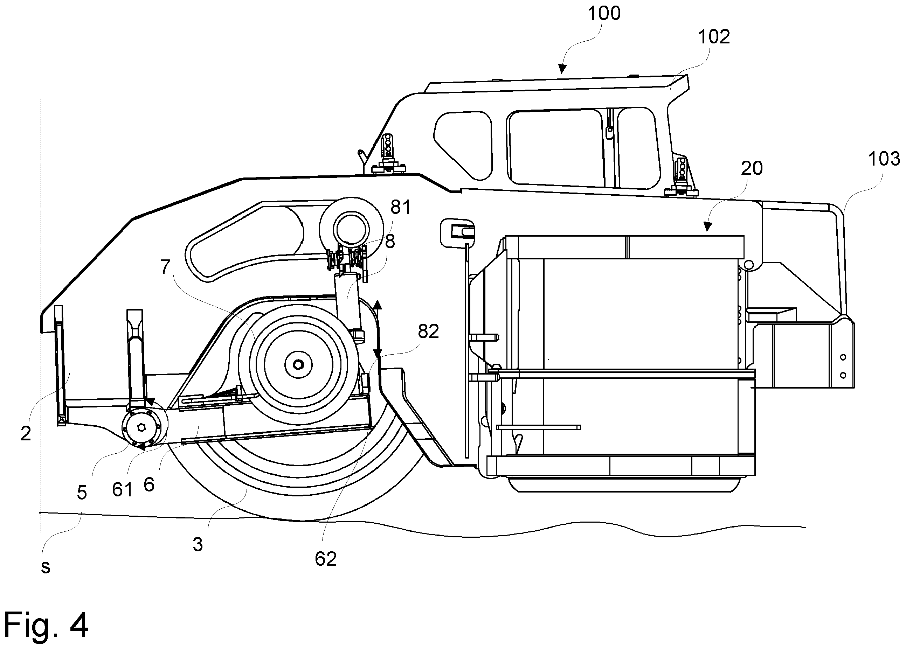

Figure 3 illustrates a situation in which the mining machine is moved to the battery 20. The gripping and holding device 40 may be aligned with the corresponding counter parts of the battery 20. The bottom 21 of the battery may be in contact with the support surface S. The actuator 8 may be started to set from a retracted state to an expanded state. The frame 2 begins to elevate from the kneeling position to the drive position. In figure 4 the battery 20 is attached with the mining machine. The front end of the mining machine is elevated from the kneeling position to the drive position.

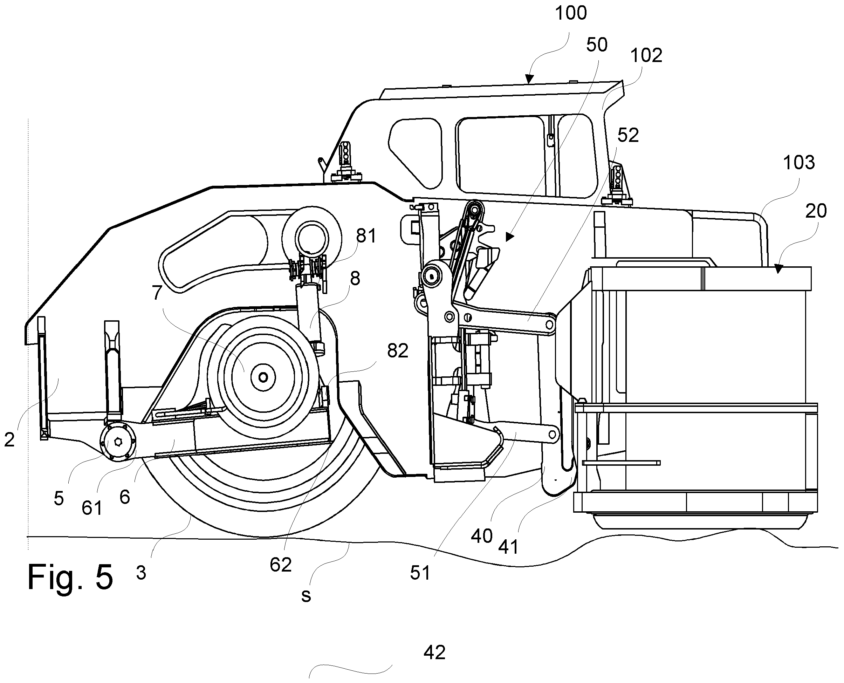

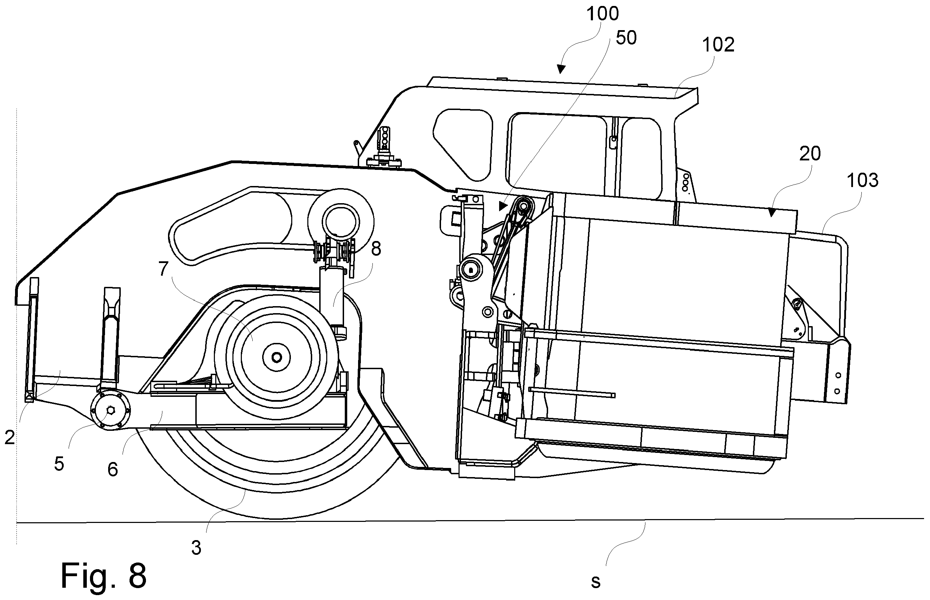

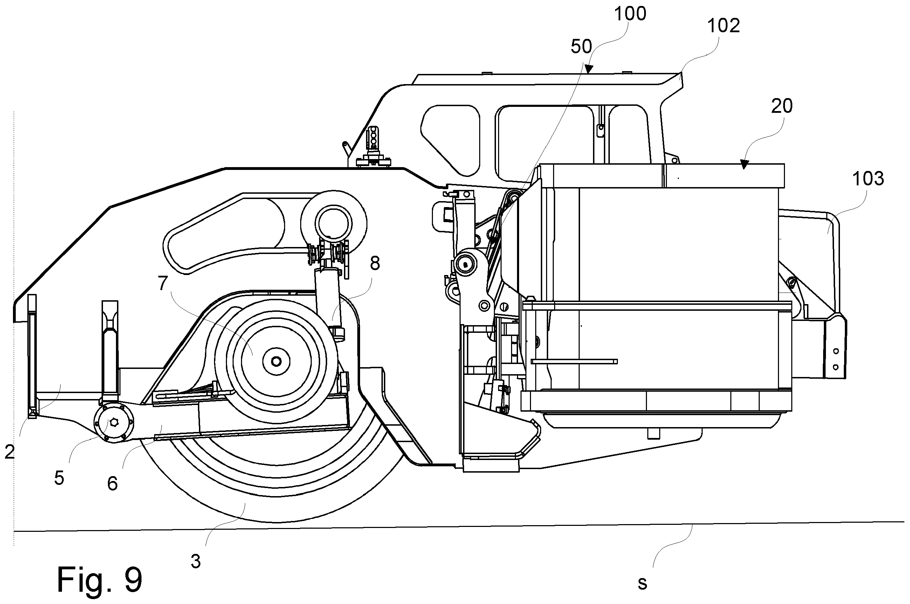

Figures 5 to 9 illustrate an embodiment of the arrangement with a moving device 50 of the gripping and holding device 40. The moving device may comprise lifting arms 51, 52. In an embodiment the lifting arms 51, 52 may be connected to the gripping and holding device 40. In an embodiment a first lifting arm 51 may be connected to lower portion of a vertical support 43 of the gripping and holding device 40. In an embodiment a second lifting arm 52 may be connected to an upper portion of the vertical support 43 of the gripping and holding device 40. The first and second lifting arms may be connected to the gripping and holding device 40 to swivel around a horizontal axis perpendicular to a longitudinal axis of each lifting arm. The other end of each lifting arm 51, 52 may be arranged to swivel around a horizontal axis perpendicular to a longitudinal axis of each lifting arm. The lifting arms are arranged on the moving device that is connected to the frame 2 of the mining machine. The moving device 51 comprises an actuator for moving the lifting arms 51, 52 and the gripping and holding device from a first position to a second position. In the first position the lifting arms and the gripping and holding device may be in a lower position (Figures 5, 6 and 7). In the second position the lifting arms 51, 52 and the gripping and holding device 40 may be in an upper position (Figures 8 and 9).

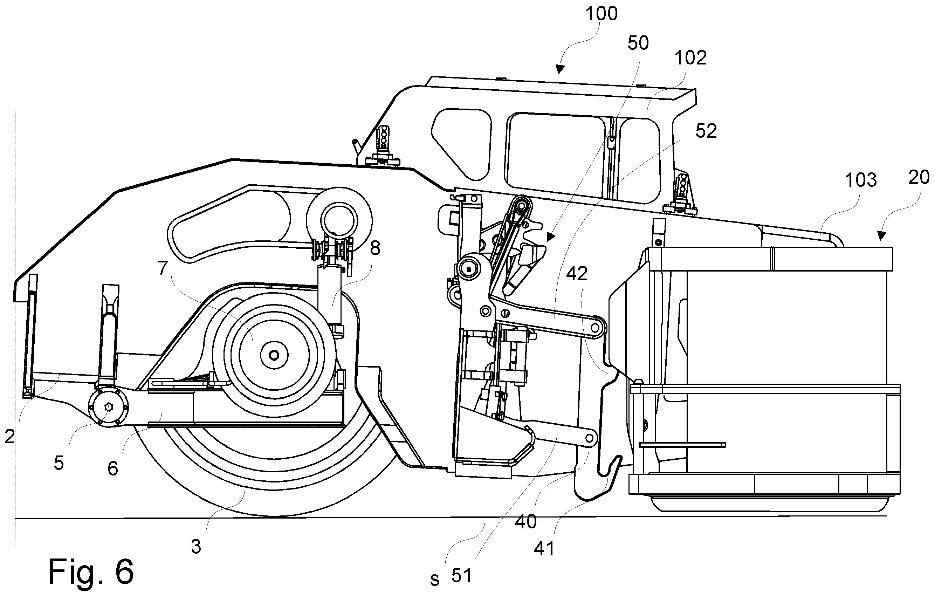

In figure 5 the moving device 50 od the gripping and holding device has lowered the battery 20 to a lover level. In figure 6 a kneeling function of the mining machine has lowered a front end of the mining machine and the battery so that the battery 20 is on the surface S and the holding and gripping device 40 have released the battery 20.

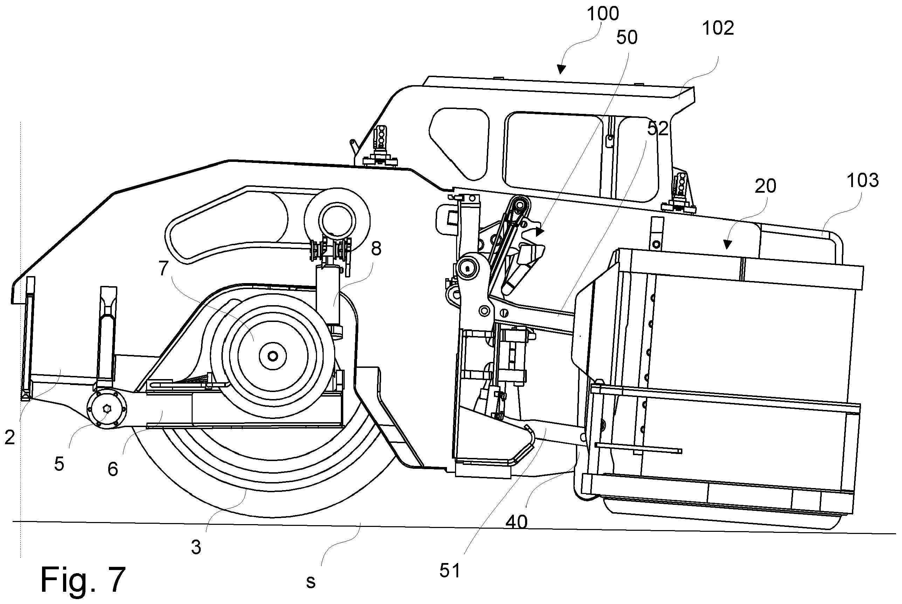

In figure 7 the gripping and holding device 40 may be connected to the counter parts of the battery 20.

In figure 8 the moving device of the gripping and holding device is illustrated in a situation in which the moving device and its lifting arms are in the upper position and the battery is attached to the mining machine.

In figure 9 the frame 2 of the mining machine is elevated from the kneeling position by an actuator 8 to the drive position.

Figures 1 to 10 illustrate schematic views of an exemplary battery assembly. However, it may be appreciated that in different embodiments, some of the following features of a battery assembly could be optional.

Referring to figure 10. The battery 20 or the battery assembly may comprise a battery cage, a battery, or a plurality of battery packs. Each battery pack may further one or more battery cells.

The battery cage may be sized and dimensioned to receive each of a battery pack or a plurality of battery packs. In the embodiments shown in figure 10, battery cage may be configured as a relatively thin outer casing with an interior cavity that can hold a battery pack or a plurality of battery packs in a stacked configuration. The battery cage may have a horizontal footprint that is slightly larger than the horizontal footprint of each battery pack. Battery cage may also have a vertical height that is slightly larger than the battery or combined heights of a plurality of the battery packs.

A battery 20 or a battery cage may include provisions to facilitate mounting and dismounting. Some embodiments can include one or more horizontal bars that are configured to function as counterparts 25, 26 and facilitate mounting. An embodiment of the battery 20 is illustrated in Figure 10. Some embodiments can include one or more vertical bars 27 that are configured to facilitate mounting. Some embodiments can include a combination of horizontal and vertical bars to operate as counterparts, 25, 26, facilitate mounting.

As seen in figure 10, the battery 20 or the battery cage may include a set of horizontal mounting bars (counterparts 25, 26), including an upper horizontal mounting bar and a lower horizontal mounting bar.

Each horizontal mounting bar (counterparts 25, 26) may be projected slightly rearwards from rearward side 28 of the battery 20 or the battery cage. Furthermore, the horizontal mounting bars (counterparts 25, 26) may be retained by two sets of vertically oriented brackets 29. These vertically oriented brackets may be located at opposing ends of the horizontal mounting bars (counterpart 25, 26). Each pair of brackets 29 may be spaced apart by a fixed distance. As an example, first vertically oriented bracket and second vertically oriented bracket are spaced apart by a distance. This configuration may divide each horizontal bar (counterpart 25, 26) into separate sections that could be grasped by a mounting and dismounting system. Specifically, the upper horizontal mounting bar may be divided into a first end segment, an intermediate segment and a second end segment. Likewise, lower horizontal mounting bar may be divided into a first end segment, an intermediate segment and a second end segment.

Some embodiments can include one or more vertical bars. As seen in figure 10, the battery or the battery cage may include a set of vertical mounting bars 27. In particular, the battery 20 or the battery cage may comprise a first vertical mounting bar and a second vertical mounting bar.

Each vertical mounting bar 27 may extend from a lower side of the battery 20 or a lower side of the battery cage portion to a lower side of an upper battery or an upper cage portion. Moreover, the vertical mounting bars may be disposed at opposing rearward corners of the battery or the battery cage. Thus, in some cases, each vertical mounting bar may also be configured to provide some strength to the battery 20 or to the battery cage under vertically applied loads. In some cases, similar vertically oriented bars may also be located at one or both of the front corners of battery cage to help with structural support.

It may be appreciated that both horizontal bars and vertical bars can facilitate mounting in at least three ways. First, either type of bar can be grasped by components of a mounting and dismounting arrangement to help raise and/or lower the battery assembly. Second, either type of bar can facilitate horizontal and/or vertical alignment by interacting with a corresponding component on a mounting and dismounting arrangement (e.g., a v-shaped block that may help to automatically align the battery/the battery cage in the horizontal and/or vertical directions). Third, either type of bar can be locked in place, for example using one or more latches or other locking mechanisms. It may be appreciated though that in different embodiments horizontal and vertical bars could be used to achieve different functions (e.g., horizontal bars may be used for lifting, alignment and latching and vertical bars may be used for alignment and latching, but in some embodiments not for lifting).

In the present embodiment shown in FIGS., set of horizontal mounting bars may function as contact points for lifting/lowering the battery/battery cage, for aligning the battery/battery cage and for locking the battery/battery cage in place (e.g., using latches that grasp the bars). In contrast, set of vertical mounting bars may not be used as contact points during lifting/lowering battery cage, but may be used to facilitate alignment and/or locking the battery/battery cage in place (e.g., using latches that grasp the bars).

The battery/battery cage may primarily be closed on the front, top, bottom and side surfaces. However, battery cage may be partially open on rearward side (as well as parts of the side surfaces) so that connecting ports or other provisions of the battery packs can be exposed.

Some embodiments can include provisions to facilitate sliding a battery on an uneven ground surface. In an embodiment the battery/battery cage may have a bottom surface with rounded corners to facilitate sliding.

The battery cage may be designed to retain and protect first battery pack and second battery pack. To do this, battery cage may be constructed to have sufficient strength while being secured to a haul truck primarily along attachment points on rearward side.

In different embodiments, materials for the battery cage could vary. In some embodiments, the battery cage may be constructed of a material including a metal or metal alloy. In some embodiments, battery cage may be constructed of a similar material to the material used in the chassis (e.g., frame) of vehicle.

Each battery pack may be configured with one or more ports for receiving electrical cables. In an embodiment the battery or the battery pack may include a port for connecting an electric cable. The port may be used to connect each battery pack to one or more circuits of a vehicle when battery assembly is mounted to the vehicle. The port may also be used to connect each battery pack to a charging source when the battery assembly has been dismounted from the vehicle. In other embodiments, however, each battery pack could include two or more electrical ports including a port for connecting the battery pack to an electrical circuit of the vehicle and a separate port for charging the battery pack.

In an embodiment of the method for mounting and dismounting a battery of a mining machine 100, wherein the method may comprise steps:
S10: lowering of an end of the mining machine 100 by an actuator 8 of a height adjustable suspension of the mining machine and
S20: releasing a first battery 20 or a battery cage from a holding and gripping device 40 for dismounting the first battery 20 and
S30: moving the mining machine and the holding and gripping device from the first battery,
S40: moving the mining machine to a second battery so that the holding and gripping device 40 is in an alignment with a counter part of the second battery and ready to connect to the counter parts of the second battery or the battery cage,
S50: elevating the end of the mining machine by the actuator 8 of the height adjustable suspension of the mining machine for gripping and
S60: holding the second battery with the gripping and holding device, and
S70: elevating the end of the mining machine by the actuator of the height adjustable suspension to an intended level.

In an embodiment method may further comprise one or more of the below presented further steps in addition to or instead of above presented steps:
S110: lowering of the end of the mining machine comprising moving a frame 2 of the mining machine from a first position, i.e. an upper position, to a second position, i.e. a lower position.
S120: moving of the frame 2 of the mining machine comprising setting the actuator 8 of a height adjustable suspension system of the mining machine from an extended state to a retracted state.
S130: the frame 2 of the mining machine comprising a support structure 6 of an axle 7 of the wheel 3, wherein the support structure 6 being arranged rotatable on the frame 2 of the mining machine, wherein moving the frame 2 comprising adjusting a movement between the support structure 6 and the frame 2 by the actuator 8 of the height adjustable suspension.
S140: wherein the frame 2 of the mining machine comprising a support structure 6 of an axle 7 of the wheel 3, wherein the support structure 6 being arranged rotatable on the frame 2 of the mining machine, wherein moving the frame 2 comprising adjusting a movement between the support structure 6 and the frame 2 by the actuator 8 of the height adjustable suspension.
S150: wherein the mobile mining machine comprising a movable holding and gripping device, wherein the method further comprising a phase of moving the holding and gripping device 40 with a moving device 50 of the holding and gripping device, and lifting/lowering the battery 20 with the movable holding and gripping device.
S710: elevating of the end of the mining machine comprising moving the frame 2 of the mining machine from a second position, i.e. a lower position, to a first position, i.e. an upper position.
S720: moving of the frame 2 of the mining machine comprising setting the actuator 8 of a height adjustable suspension system of the mining machine from a retracted state to an extended state.
S730: wherein the frame 2 of the mining machine comprising a support structure 6 of an axle 7 of the wheel 3, wherein the support structure 6 being arranged rotatable on the frame 2 of the mining machine, wherein moving the frame 2 comprising adjusting a movement between the support structure 6 and the frame 2 by the actuator 8 of the height adjustable suspension.

In an embodiment of the mining machine a use of a height adjustable suspension (kneeing system) may help the battery mounting/unmounting arrangement with lift system in a mining machine, such as a dump truck. With the adjustable suspension system, the front end of the mining machine can be lowered so that it is possible to do a battery swap (i.e. mounting/unmounting of a battery). In addition to the kneeing system, especially if the movement range of the adjustable suspension is not enough for the battery mounting/unmounting, then also use some lift system additional to suspension movement. In this case the lift system can be significantly smaller/with a shorter range of motion, than without the suspension system.

It is obvious to a person skilled in the art that with the advancement of technology, the basic idea of the invention may be implemented in various ways. The invention and its embodiments are thus not limited to the examples described above, instead they may vary within the scope of the claims.

### Reference signs:

- 2: Frame/chassis
- 3: First wheel/front wheel
- 4: Second wheel/rear wheel
- 5: Pivot
- 6: Support structure
- 7: Front axle
- 8: Suspension actuator
- 20: Battery/battery cage
- 21: Bottom of the battery
- 22: Upper wall of the battery
- 25: Counterpart
- 26: Counterpart
- 27: Vertical mounting bar
- 28: Rearward side of the battery
- 29: Bracket
- 40: Gripping and holding device
- 41: Hook-like gripping and holding part
- 42: Hook-like gripping and holding part
- 43: Recess
- 44: Hook part
- 45: Vertical support
- 46: Connecting part
- 47: Support part
- 50: Moving device of the gripping and holding device
- 51: Lifting arm
- 52: Lifting arm
- 61: First end of the support
- 62: Second end of the support
- 81: First end of the actuator
- 82: Second end of the actuator
- 100: Mining machine
- 101: Dumb bed
- 102: Cab
- 103: Front end
- 104: Rear end
- S: Support surface/ground

## Claims

1. Method for mounting and dismounting a battery of a mining machine (100), wherein the method comprising:
lowering of an end of the mining machine (100) by an actuator (8) of a height adjustable suspension of the mining machine and releasing a first battery (20) or a battery cage from a holding and gripping device (40) for dismounting the first battery (20) and moving the mining machine and the holding and gripping device from the first battery, moving the mining machine to a second battery so that the holding and gripping device (40) is in an alignment with a counter part of the second battery and ready to connect to the counter parts of the second battery or the battery cage, elevating the end of the mining machine by the actuator (8) of the height adjustable suspension of the mining machine for gripping and holding the second battery with the gripping and holding device, and elevating the end of the mining machine by the actuator of the height adjustable suspension to an intended level.

2. The method according to claim 1, wherein lowering of the end of the mining machine comprising moving a frame (2) of the mining machine from a first position, i.e. an upper position, to a second position, i.e. a lower position.

3. The method according to claim 1 or 2, wherein elevating of the end of the mining machine comprising moving the frame (2) of the mining machine from a second position, i.e. a lower position, to a first position, i.e. an upper position.

4. The method according to any one of claims 1 to 3, wherein moving of the frame (2) of the mining machine comprising setting the actuator (8) of a height adjustable suspension system of the mining machine from an extended state to a retracted state and/or from a retracted state to an extended state.

5. The method according to any one of claims 1 to 4, wherein the frame (2) of the mining machine comprising a support structure (6) of an axle (7) of the wheel (3), wherein the support structure (6) being arranged rotatable on the frame (2) of the mining machine, wherein moving the frame (2) comprising adjusting a movement between the support structure (6) and the frame (2) by the actuator (8) of the height adjustable suspension.

6. The method according to any one of claims 1 to 5, wherein the mobile mining machine comprising a movable holding and gripping device, wherein the method further comprising a phase of moving the holding and gripping device (40) with a moving device (50) of the holding and gripping device, and lifting/lowering the battery (20) with the movable holding and gripping device.

7. Arrangement of a mining machine for mounting and dismounting a battery of a mining machine, wherein the arrangement comprising a height adjustable suspension at least in an end of the mining machine, a gripping and holding device (40) for gripping and holding a battery, and a counterpart (25, 26) for the gripping and holding device arranged on a battery or on a battery cage .

8. The arrangement according to claim 7, wherein the gripping and holding device (40) comprises at least two hook-like gripping and holding parts (41, 42) .

9. The arrangement according to claim 7 or 8, wherein the height adjustable suspension comprises a frame (2) of the mining machine and a support structure (6) of an axle (7) of a wheel (3) of the mining machine, wherein the frame (2) and the support structure (6) are arranged relative movably by an actuator (8) of the adjustable suspension of the mining machine.

10. The arrangement according to any one of claims 7 to 9, wherein the support structure of an axle of the wheel is arranged rotatably supported to the frame (2) and a first end (81) of the actuator (8) is connected to the frame (2) and a second end (82) of the actuator (8) is connected to the support structure (6).

11. The arrangement according to claim 10, wherein the frame (2) and the support structure (6) of an axle (7) of the wheel are rotatably arranged with each other by a pivot (5).

12. The arrangement according to any one of claims 7 to 11, wherein the gripping and holding device (40) is arranged in an end of the mining machine between the front wheel axle (7) and the front end (103) of the mobile mining machine or between a rear wheel axle and the rear end (104) of the mining machine.

13. The arrangement according to any one of claims 7 to 12, wherein the actuator (8) of the height adjustable suspension is a hydraulic actuator.

14. The arrangement according to any one of claims 7 to 13, wherein the arrangement further comprises a moving device (50) of the holding and gripping device (40).

15. Mobile mining machine comprising an arrangement for mounting and dismounting a battery of a mining machine according to any one of claims 7 to 14.
